# EUROPÄISCHE PATENTANMELDUNG

(11) **EP 3 795 281 A1**
(43) Veröffentlichungstag der Anmeldung: **24.03.2021**
(21) Anmeldenummer: 20193825.5
(22) Anmeldetag: 01.09.2020
(51) Int. Cl.: B23B 31/00, B23B 31/117, B23B 31/20

(54) **BEARBEITUNGSMASCHINE**

(30) Priorität: 18.09.2019 DE 102019125158
(71) Anmelder: AMB-ELEKTRIK GmbH, 72406 Bisingen (DE)
(72) Erfinder: Beutelspacher, Marc, 71229 Leonberg (DE); Giesler, Steffen, 72458 Albstadt (DE)
(74) Vertreter: Jakelski & Althoff Patentanwälte PartG mbB

(57) **Zusammenfassung**

Eine Bearbeitungsmaschine (10), insbesondere Oberfräse, mit einer um eine Rotationsachse drehend antreibbaren Welle (70), einer Werkzeugaufnahme (60), die mit der Welle (70) antriebswirksam gekoppelt oder einstückig mit dieser ausgebildet ist, und einer Spanneinrichtung zum lösbaren Befestigen eines Werkzeugs (90) in der Werkzeugaufnahme (60), wobei die Spanneinrichtung umfasst:
- wenigstens ein an der Werkzeugaufnahme gehaltenes Klemmorgan, das eine zentrale Durchführung zum Durchführen eines in die Werkzeugaufnahme (60) einzuführenden Werkzeugs (90) aufweist, wobei das Klemmorgan durch axiale Beaufschlagung verformbar und durch dieses Verformen die Weite der Durchführung veränderbar ist, und
- ein an der Werkzeugaufnahme gelagertes Spannelement (40), das in axialer Richtung zwischen einer Spannstellung und einer Lösestellung verschiebbar ist, wobei durch ein Verschieben des Spannelements (40) in Richtung der Spannstellung das Klemmorgan axial beaufschlagbar ist,
ist dadurch gekennzeichnet, dass das Klemmorgan eine an der Werkzeugaufnahme (60) lösbar arretierbare Spannhülse (50) ist, welche durch Verschieben des Spannelements (40) in Richtung der Spannstellung eine Verringerung der Weite der Durchführung (52) erfährt.

## Beschreibung

Die Erfindung betrifft eine Bearbeitungsmaschine, insbesondere eine Oberfräse, gemäß dem Oberbegriff des Anspruchs 1.

### Hintergrund der Erfindung

Solche Bearbeitungsmaschinen werden mit unterschiedlichen Werkzeugen, beispielsweise Fräsern, Bohrern und dergleichen verwendet. Dabei weisen die Schafte dieser Werkzeuge unterschiedliche Durchmesser auf.

Eine gattungsgemäße Bearbeitungsmaschine ist beispielsweise aus der EP 3 403 784 A1 bekannt.

Bei der EP 3 403 784 A1 soll das Problem gelöst werden, das Einspannen von Werkzeugen an Bearbeitungsmaschinen zu vereinfachen, ohne die Verbindungsfestigkeit und die Rundlaufgenauigkeit des eingespannten Werkzeugs zu beeinträchtigen. Hierzu umfasst eine Spanneinrichtung wenigstens ein an der Werkzeugaufnahme gehaltenes Klemmorgan, das eine zentrale Durchführung zum Durchführen eines in die Werkzeugaufnahme einzuführenden Werkzeugs aufweist, wobei das Klemmorgan durch axiale Beaufschlagung verformbar und durch dieses Verformen die Weite der Durchführung veränderbar ist, und ein an der Werkzeugaufnahme gelagertes Spannelement, das in axialer Richtung zwischen einer Spannstellung und einer Lösestellung verschiebbar ist, wobei das Klemmorgan durch ein Verschieben des Spannelements in Richtung der Spannstellung axial beaufschlagbar ist. Das Werkzeug wird in der Werkzeugaufnahme durch eine Verengung der Durchführung infolge einer Verformung des Klemmorgans festgeklemmt. Diese Verformung wird bei der aus dem Stand der Technik bekannten Bearbeitungsmaschine dadurch herbeigeführt, dass das Spannelement relativ zur Werkzeugaufnahme verschoben und das Klemmorgan entweder von dem Spannelement selbst oder von einem mit diesem in mechanischer Verbindung stehenden Übertragungselement dadurch axial beaufschlagt wird. Dabei reicht ein vergleichsweise geringer axialer Hub des Spannelements aus, um eine hohe Reibmomentübertragung von der Werkzeugaufnahme auf das Werkzeug zu ermöglichen. Das Klemmorgan, beispielsweise eine flachkegelige Klemmscheibe, insbesondere eine Sternscheibe, weist eine die zentrale Durchführung umgebende ringförmige Gestalt auf. Durch einen solchen Ring kann ein besonders gleichmäßiger radialer Druck auf einen einzuspannenden Werkzeugschaft ausgeübt werden, wodurch sich eine hohe Rundlaufgenauigkeit ergibt. Der Ring weist einen äußeren Randbereich und einen inneren Randbereich auf, deren einer durch Verschieben des Spannelements in Richtung der Spannstellung unter Abstützung des anderen axial beaufschlagbar ist, um das Klemmorgan abzuflachen. Bei dieser Abflachung verengt sich die zentrale Aussparung des Rings und legt sich an einen durch diese hindurchgeführten Werkzeugschaft an, wobei dieser zuverlässig gehalten wird.

Problematisch bei einer solchen Bearbeitungsmaschine ist es nun, Fräser, Bohrer und dergleichen Werkzeuge mit Schäften unterschiedlichen Durchmessers einzuspannen. Der innere Durchmesser der Klemmscheiben ist vielmehr auf einen verhältnismäßig kleinen Bereich von Schaftdurchmessern eingestellt und funktioniert nur in diesem kleinen Bereich optimal. Für beispielsweise deutlich kleinere Schaftdurchmesser ist eine Klemmung jedoch nicht mehr zuverlässig gewährleistet. In diesem Falle werden Hülsen verwendet, die den Schaft auf den vorgegebenen gewünschten Durchmesser vergrößern. Diese Hülsen weisen jedoch den Nachteil auf, dass sich die Rundlaufeigenschaften bei Verwendung einer solchen Hülse verschlechtern. Darüber hinaus müssen beim Einspannen des Werkzeugs zusätzliche Arbeitsschritte vorgenommen werden, nämlich Entnehmen der passenden Hülse, Aufstecken der Hülse auf den Endbereich des Schafts des Werkzeugs und Einspannen des Schaftes zusammen mit der Hülse in die Bearbeitungsmaschine. Werkzeuge mit größeren Schaftdurchmessern können dagegen gar nicht gespannt werden.

Weiterhin ist es problematisch, dass das Werkzeug während des Einspannvorgangs eine geringfügige Bewegung in Axialrichtung ausführt. Die axiale Ausrichtung des Werkzeugs und damit die Bearbeitungstiefe ist damit nicht ohne weiteres reproduzierbar.

### Offenbarung der Erfindung

Mit der Bearbeitungsmaschine mit den Merkmalen des Anspruchs 1 ist es demgegenüber möglich, bei unterschiedlichen Bearbeitungsvorgängen unterschiedliche Werkzeuge, auch mit unterschiedlichen Schaftdurchmessern, sehr schnell und sicher und insbesondere ohne Zuhilfenahme von weiteren Bauteilen, wie beispielsweise die vorgenannten Adaptionshülsen, einzuspannen. Hierzu ist erfindungsgemäß vorgesehen, dass das Klemmorgan eine an der Werkzeugaufnahme lösbar arretierbare Spannhülse ist, welche durch Verschieben des Spannelements in Richtung der Spannstellung eine Verringerung der Weite der Durchführung erfährt. Ganz besonders vorteilhaft ist es, dass die Werkzeuge beim Einspannen mit einer solchen Spannhülse keine Axialbewegung ausführen und insoweit der Tiefenanschlag der Werkzeuge klar definiert ist.

Solche Spannhülsen sind jeweils hinsichtlich ihrer Weite, d.h. ihres Innendurchmessers, an unterschiedliche Schaftdurchmesser angepasst. Die Spannhülse wird an der Werkzeugaufnahme arretiert und kann jederzeit sehr schnell wieder von der Werkzeugaufnahme gelöst werden, um so eine Spannhülse mit anderer Weite bzw. anderem Innendurchmesser an der Werkzeugaufnahme zu arretieren.

Da das Arretieren und Lösen der Spannhülse an der Werkzeugaufnahme sehr schnell vonstatten geht, kann die Bearbeitungsmaschine sehr schnell und einfach auf unterschiedliche Schaftdurchmesser umgerüstet werden und es müssen nicht umgekehrt die Schaftdurchmesser an die Bearbeitungsmaschine angepasst werden, wie dies aus dem Stand der Technik bekannt ist.

Das erleichtert die Handhabung der Bearbeitungsmaschine wesentlich, wobei bei sehr schnellem Auswechseln unterschiedlicher Werkzeuge ein sicherer Halt der Werkzeuge gewährleistet ist, denn die Spannhülsen ermöglichen eine besonders sichere Einspannung des Werkzeugs.

Gemäß einem sehr vorteilhaften Aspekt der Erfindung ist vorgesehen, dass die Spannhülse einen tiefeneinstellbaren Anschlag umfasst, an dem das Schaftende im eingespannten Zustand zur Anlage kommt. Hierdurch kann die Bearbeitungstiefe des Werkzeugs sehr leicht vorgegeben werden.

Dieser tiefeneinstellbare Anschlag ist sehr vorteilhaft durch einen Gewindestift realisiert, der insbesondere im demontierten Zustand der Spannhülse durch Drehen eingestellt wird. Die Spannhülse umgreift diesen Gewindestift. Das bedeutet, dass der Gewindestift an den Innendurchmesser der Spannhülse, also deren Weite angepasst ist und damit im Wesentlichen dem Durchmesser des Werkzeugschafts entspricht.

Besonders vorteilhaft ist die Befestigung des Klemmorgans der Spannhülse durch einen Bajonettverschluss realisierbar, wie dies bereits eingangs erwähnt wurde. Dieser Bajonettverschluss weist ein erstes zylindrisches Teil auf, welches an der Werkzeugaufnahme angeordnet ist und ein zweites, an dem ersten zylindrischen Teil befestigbares zylindrisches Teil, in welchem das Spannelement lösbar befestigt ist. Dieses zweite zylindrische Teil kann durch eine einfache 90°-Drehung an dem ersten befestigt werden und mit ihm die an ihm befestigte Spannhülse. Die Spannhülse ist dann beispielsweise in einer umlaufenden Nut in dem zweiten zylindrischen Teil befestigt, wobei ihre Kompressibilität ausgenutzt wird, um beispielsweise in einer entsprechend ringförmig umlaufenden Ausnehmung in dem zweiten zylindrischen Teil aufgenommen zu werden.

### Kurze Beschreibung der Zeichnungen

Nachfolgend wird die Erfindung beispielhaft unter Bezugnahme auf die Zeichnung beschrieben. Es zeigen:
- Fig. 1: eine isometrische Ansicht einer erfindungsgemäßen Bearbeitungsmaschine im nicht gespannten Zustand;
- Fig. 2: eine isometrische Ansicht der in Fig. 1 dargestellten Bearbeitungsmaschine im gespannten Zustand;
- Fig. 3: eine Schnittansicht der in Fig. 1 dargestellten Bearbeitungsmaschine;
- Fig. 4: eine Schnittansicht der in Fig. 2 dargestellten Bearbeitungsmaschine;
- Fig. 5: eine teilweise weggebrochene isometrische Detailansicht einer Werkzeugaufnahme der in Fig. 1 bis 4 dargestellten Bearbeitungsmaschine;

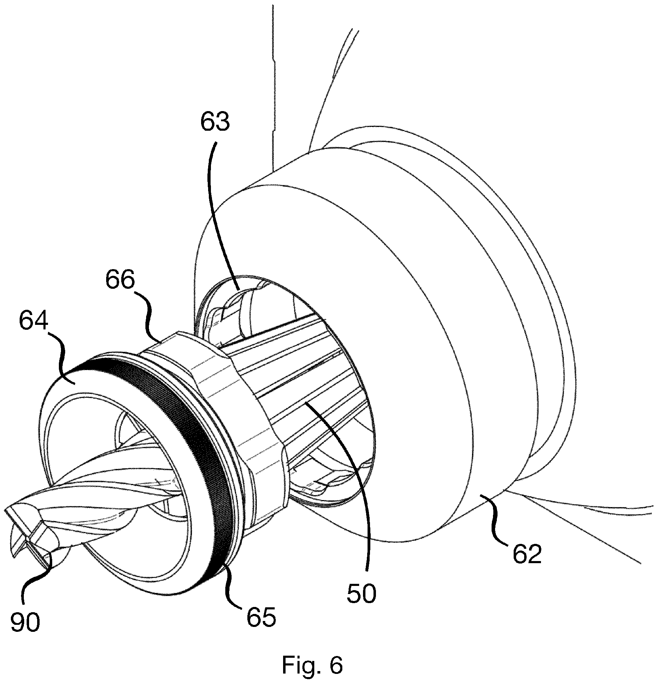

- Fig. 6: eine teilweise weggebrochene isometrische Darstellung der in Fig. 5 gezeigten Werkzeugaufnahme während des Einsetzens eines Werkzeugs unter Zuhilfenahme einer Spannhülse;
- Fig. 7: eine isometrische Darstellung einer Spannhülse und eines in ihr eingesetzten Werkzeugs und
- Fig. 8: eine isometrische Darstellung der in Fig. 7 dargestellten Spannhülse aus anderem Blickwinkel.

### Ausführungsformen der Erfindung

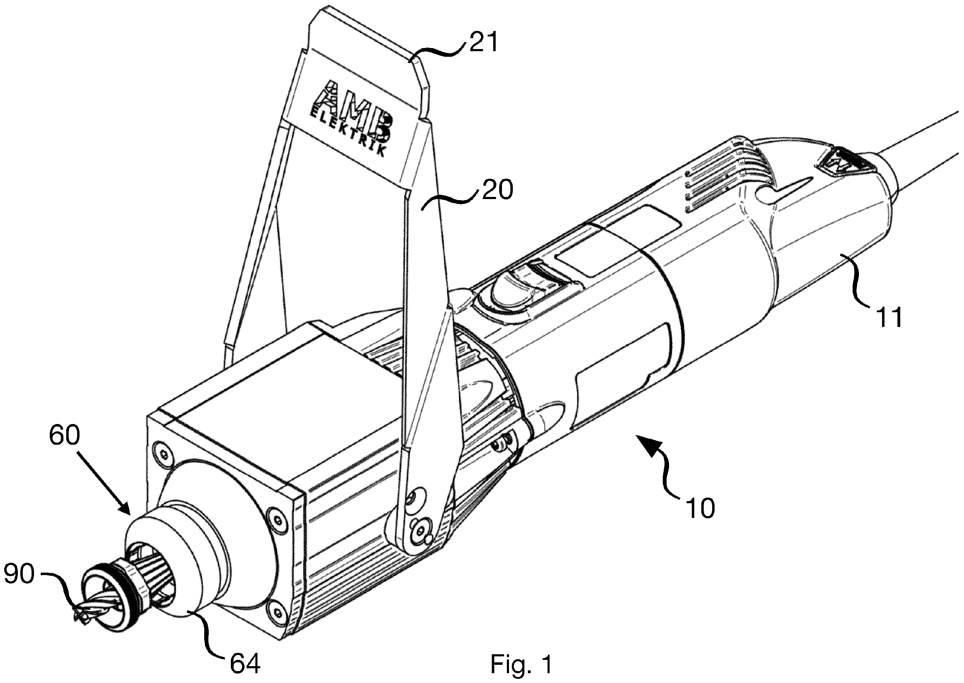

Eine als Ganze mit 10 bezeichnete Bearbeitungsmaschine, dargestellt in den Fig. 1 bis 4, umfasst ein Gehäuse 11, in dem eine Welle 70 durch einen Elektromotor 72 drehbeweglich antreibbar ist.

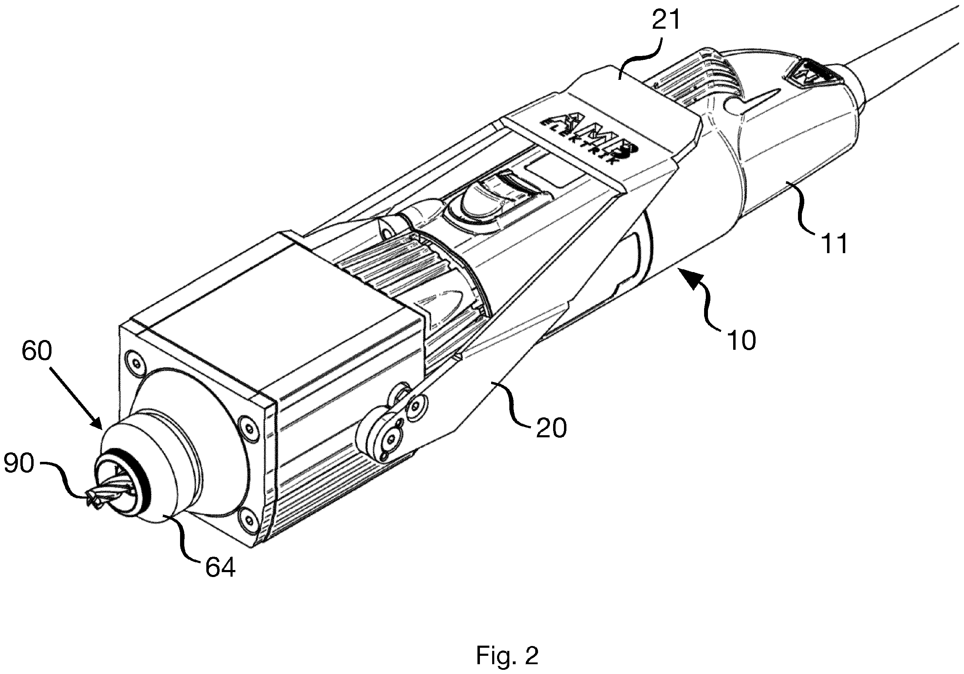

An dem Gehäuse 11 ist ein Spannhebel 20 mit einem Griff 21 drehbeweglich angeordnet, der von einer ersten Stellung, welche einem nicht gespannten Werkzeug zugeordnet ist und in Fig. 1 dargestellt ist, in eine zweite Stellung, welche einem gespannten Werkzeug zugeordnet ist und in Fig. 2 dargestellt ist, durch eine 90°-Drehung beweglich ist.

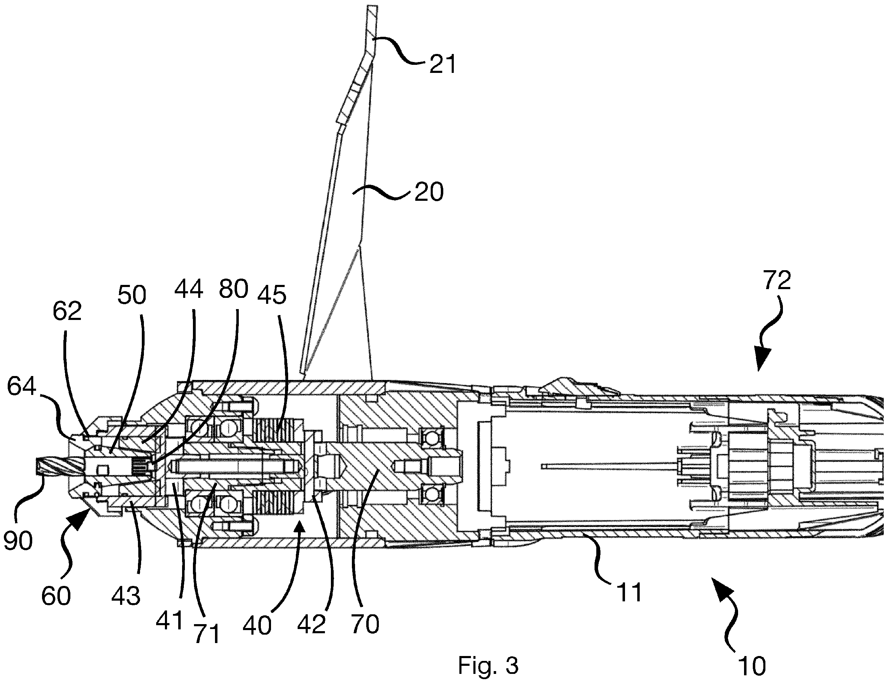

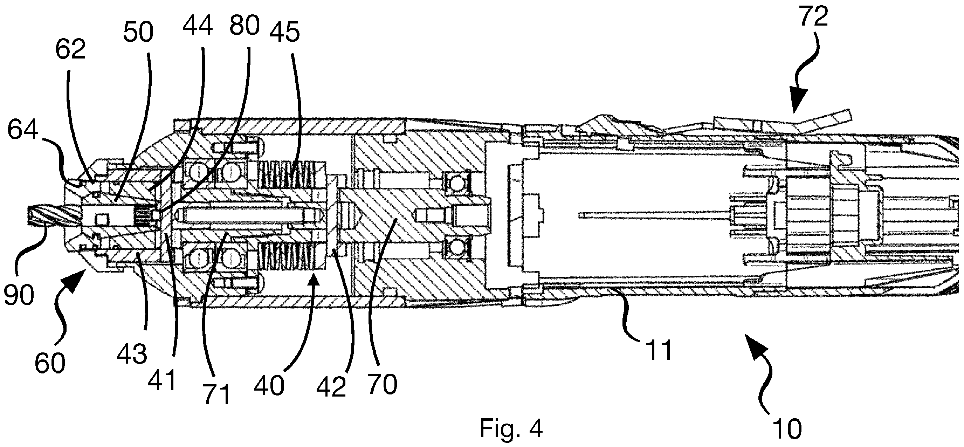

Wie den Fig. 3 und 4 zu entnehmen ist, verschiebt sich durch diese 90°-Drehung im Inneren des Gehäuses 11 ein Spannelement 40 in Axialrichtung in Richtung einer Werkzeugaufnahme 60 und eines in dieser angeordneten Werkzeugs 90 am werkzeugseitigen Ende der Bearbeitungsmaschine 10. Das Spannelement 40 weist zwei senkrecht zur Axialrichtung verlaufende Träger 41, 42 auf, die miteinander rotationsfest verbunden sind. An einem der Träger 42 liegt eine Feder 45 an, die im entspannten Zustand eines Werkzeugs 90 gespannt (Fig. 3) und im gespannten Zustand des Werkzeugs 90 entspannt ist (Fig. 4). Das Spannelement 40 weist weiterhin ein hülsenförmiges Endelement 43 auf, welches eine im Inneren kegelförmige Hülse 44 umschließt. An den Kegelflächen liegt eine Spannhülse 50 an, die eine an das Werkzeug 90 angepasste zentrale Öffnung aufweist, in die das Werkzeug 90 eingeführt wird. Im entspannten Zustand des Werkzeugs 90 ist die im Inneren kegelförmige Hülse 44 in Axialrichtung von der werkzeugseitigen Öffnung 60 weg hin zu dem Elektromotor 72 verschoben, sodass die Spannhülse 50 das Werkzeug 90 mangels Klemmung freigibt. In diesem Falle ist das Federpaket 45 gespannt. Im gespannten Zustand des Werkzeugs 90 ist bei entspanntem Federpaket 45 die im Inneren kegelförmige Hülse 44 in Richtung der Werkzeugaufnahme 60 verschoben, wobei ihre schräg verlaufenden Kegelflächen entlang der Spannhülse 50 gleiten und so das Werkzeug 90 spannen. Durch eine Bewegung des Hebels 20 mittels des Griffs 21 von der entspannten Stellung (Fig. 1 und Fig. 3) in die gespannte Stellung (Fig. 2 und Fig. 4) kann das Werkzeug 90 aus der Werkzeugaufnahme 60 entnommen und beispielsweise ein anderes Werkzeug wieder eingesetzt und gespannt werden. Im gespannten Zustand wird das Werkzeug 90 durch eine Welle 70 und eine Hohlwelle 71, welche innerhalb des Spannelements 40 drehbeweglich gelagert ist, mittels des Elektromotors 72 in Rotation versetzt.

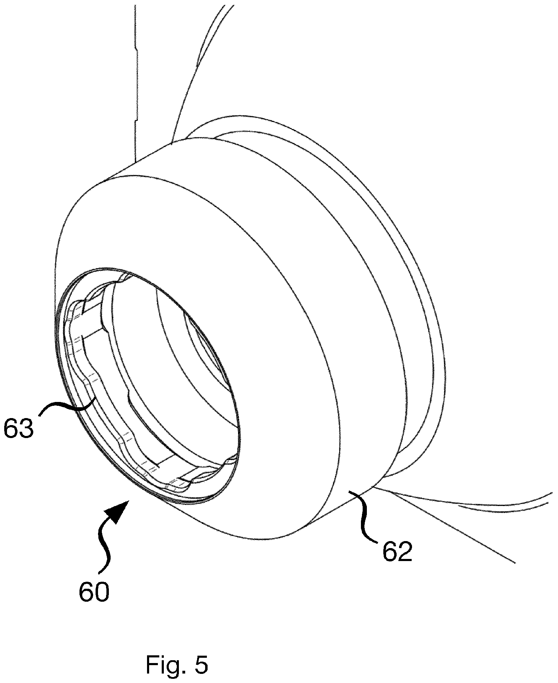

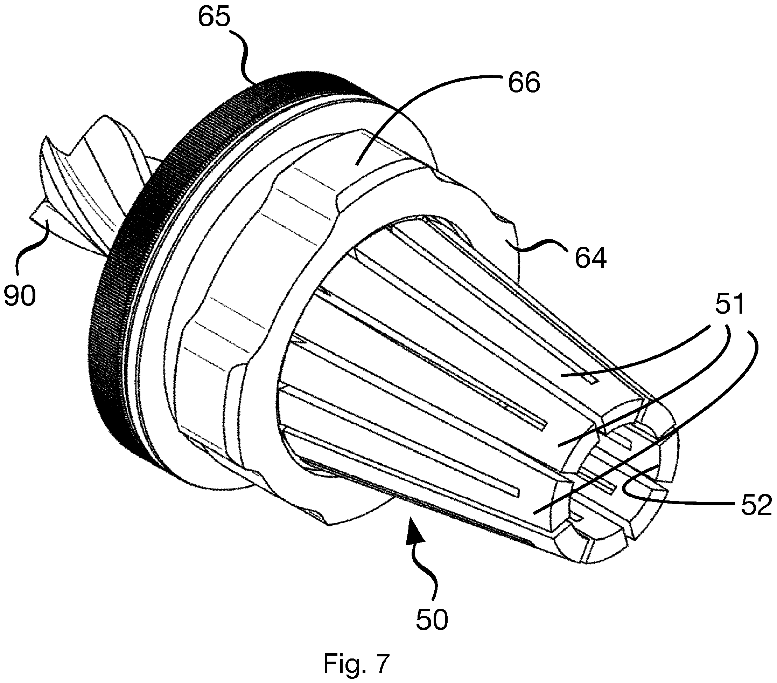

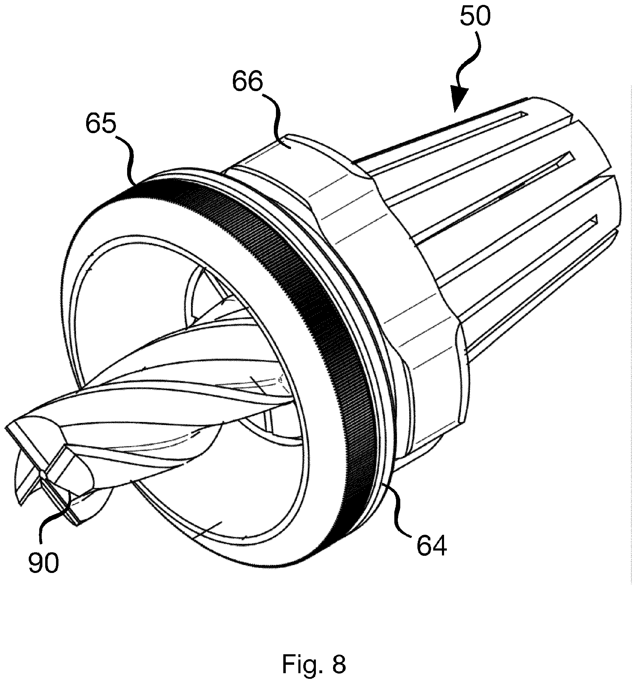

Fig. 5 zeigt die Werkzeugaufnahme 60 in vergrößerter Darstellung. Die Werkzeugaufnahme 60 ist als Bajonettverschluss ausgebildet mit einem drehfest an dem Gehäuse 11 angeordneten zylindrischen ersten Bajonettverschlusselement 62, dessen Innendurchmesser eine entsprechende Bajonettverschlusskulisse 63 aufweist. In dieses erste Bajonettverschlusselement 62 wird das zweite Bajonettverschlusselement 64, welches eine entsprechende Bajonettverschlusskulisse 66 aufweist (Figur 7), durch eine Drehbewegung um 90° eingesetzt und in dem ersten Bajonettverschlusselement 62, welches drehfest mit dem Gehäuse 11 verbunden ist, arretiert. In dem zweiten Bajonettverschlusselement 64 ist die Spannhülse 50 lösbar befestigbar. Diese in den Fig. 7 und 8 dargestellte Spannhülse 50 weist auf an sich bekannte Weise geschlitzte Spannelemente 51 auf, die an ihrem äußeren Umfang kegelförmig ausgebildet sind und an ihrem inneren Umfang eine hülsenförmige Öffnung 52 ausbilden. Diese Öffnung 52 dient der Aufnahme des Werkzeugs 90. Das zweite Bajonettverschlusselement 64 weist zur leichteren Handhabung an seinem vorderen äußeren Bereich eine gerändelte Griffzone 65 auf, welche die Einsetzung und Drehbewegung und damit Arretierung in dem ersten Bajonettverschlusselement 62 erleichtert. Wie insbesondere in Fig. 8 dargestellt ist, wird das Werkzeug 90, beispielsweise ein Bohrer oder ein Fräser, auf der dem Spannelement 50 abgewandten Seite des zweiten Bajonettverschlusselements 64 eingeführt und während der Befestigung des zweiten Bajonettverschlusselements 64 an dem ersten Bajonettverschlusselement 62 dort gehalten. Das Spannelement 50 wird dabei mittels des zweiten Bajonettverschlusselements 64 in die Öffnung des ersten Bajonettverschlusselements 62 eingeführt, wobei die am äußeren Umfang des zweiten Bajonettverschlusselements 64 angeordnete Kulisse 66 in die Kulisse 63 des ersten Bajonettverschlusselements 62 eingreift und durch eine Drehbewegung um 90° arretiert wird. Sodann wird durch Betätigen des Hebels 20 mittels des Griffs 21 das Werkzeug 90 gespannt, indem die Segmente 51 durch Verschieben der kegelförmigen Hülse 44 nach innen in Richtung der Symmetrieachse gedrückt werden und so das Werkzeug 90 in der Öffnung 52 klemmen.

Es ist hervorzuheben, dass statt des hier beschriebenen und dargestellten Bajonettverschlusses auch ein (nicht dargestellter) Schraubverschluss zur Befestigung des Werkzeugs 90 in der Werkzeugaufnahme 60 vorgesehen sein kann. In diesem Falle ist an dem Gehäuse 10 ein erstes Schraubverschlusselement angeordnet, an dem ein zweites Schraubverschlusselement, welches die Spannhülse 50 trägt, durch Einschrauben befestigbar und wieder lösbar ist.

Wenn nun ein Werkzeug 90 mit einem Werkzeugschaft mit einem anderen Durchmesser eingespannt werden soll, für den die Spannhülse 50 nicht geeignet ist, da sie beispielsweise einen zu großen Innendurchmesser, d.h. eine zu große innere Weite aufweist, so wird die Spannhülse 50 durch Drehbewegung des zweiten Bajonettverschlusselements 64 entgegen der Uhrzeigerrichtung der Werkzeugaufnahme 60 entnommen. Sodann wird die Spannhülse 50 aus dem zweiten Bajonettverschlusselement 64 entnommen, was durch Zusammendrücken der Segmente 51 möglich ist. Daraufhin wird eine Spannhülse 50 mit anderem Innendurchmesser durch Zusammendrücken der Segmente 51 in das zweite Bajonettverschlusselement 64 eingesetzt und dieses zusammen mit dem Werkzeug 90 anderen Durchmessers in der Werkzeugaufnahme 60, d.h. in dem ersten Bajonettverschlusselement 62 befestigt. Auf diese Weise können Adaptionshülsen und dergleichen entfallen, welche sich insbesondere negativ in Bezug auf die Rundlaufeigenschaften eines derartigen Werkzeugs auswirken.

Es wird vielmehr eine an das Werkzeug 90 angepasste Spannhülse 50 montiert und das Werkzeug 90 zusammen mit dieser Spannhülse 50 in der Werkzeugaufnahme 60 mittels der beiden Bajonettverschlusselemente 62 und 64 montiert. Der Außendurchmesser bleibt dabei unverändert, sodass die äußeren kegelförmigen Flächen der Segmente 51 unverändert sind und durch Verschieben der kegelförmigen Hülse 44 der Spannvorgang wie oben beschrieben erfolgen kann.

Hervorzuheben ist auch, dass die Einspannung des Werkzeugs 90 mittels der Spannhülse 50 während des Spannvorgangs nicht zu einer Bewegung des Werkzeugs 90 in Axialrichtung führt. Vielmehr verschiebt sich das Werkzeug 90 in Axialrichtung nicht, sodass die Tiefeneinstellung des Werkzeugs 90 bei einem späteren Bearbeitungsvorgang erhalten bleibt.

Um diese Tiefeneinstellung noch weiter zu modifizieren und zu variieren, sieht eine Ausgestaltung vor, dass an dem Element 41 ein Gewindestift 80 angeordnet ist, welcher von außerhalb der Werkzeugaufnahme 60 betätigbar ist und so eine Veränderung der Tiefe des axialen Anschlags ermöglicht. Ein Herausschrauben dieses Gewindestifts 80 führt zu einem weniger tiefen Anschlag des Werkzeugs 90. Ein Hineinschrauben des Gewindestifts 80 führt zu einem tieferen Anschlag des Werkzeugs 90. Erst durch Verwendung der Spannhülse 50 ist sichergestellt, dass während des Spannvorgangs des Werkzeugs 90 keine Axialbewegung des Werkzeugs 90 ausgeführt wird, sodass die präzise Einstellung mittels eines Anschlags, der durch beispielsweise den Gewindestift 80 realisiert wird, möglich ist.

## Patentansprüche

1. Bearbeitungsmaschine (10), insbesondere Oberfräse, mit einer um eine Rotationsachse drehend antreibbaren Welle (70), einer Werkzeugaufnahme (60), die mit der Welle (70) antriebswirksam gekoppelt oder einstückig mit dieser ausgebildet ist, und einer Spanneinrichtung zum lösbaren Befestigen eines Werkzeugs (90) in der Werkzeugaufnahme (60), wobei die Spanneinrichtung umfasst:
- wenigstens ein an der Werkzeugaufnahme gehaltenes Klemmorgan, das eine zentrale Durchführung zum Durchführen eines in die Werkzeugaufnahme (60) einzuführenden Werkzeugs (90) aufweist, wobei das Klemmorgan durch axiale Beaufschlagung verformbar und durch dieses Verformen die Weite der Durchführung veränderbar ist, und
- ein an der Werkzeugaufnahme gelagertes Spannelement (40), das in axialer Richtung zwischen einer Spannstellung und einer Lösestellung verschiebbar ist, wobei durch ein Verschieben des Spannelements (40) in Richtung der Spannstellung das Klemmorgan axial beaufschlagbar ist,
**dadurch gekennzeichnet, dass** das Klemmorgan eine an der Werkzeugaufnahme (60) lösbar arretierbare Spannhülse (50) ist, welche durch Verschieben des Spannelements (40) in Richtung der Spannstellung eine Verringerung der Weite der Durchführung (52) erfährt.

2. Bearbeitungsmaschine nach Anspruch 1, **dadurch gekennzeichnet, dass** das Klemmorgan (50) durch einen Bajonettverschluss an der Werkzeugaufnahme (60) lösbar arretierbar ist.

3. Bearbeitungsmaschine nach Anspruch 1, **dadurch gekennzeichnet, dass** das Klemmorgan (50) durch einen Schraubverschluss an der Werkzeugaufnahme lösbar arretierbar ist.

4. Bearbeitungsmaschine nach Anspruch 1, **dadurch gekennzeichnet, dass** die Spannhülse (50) einen tiefeneinstellbaren Anschlag umfasst, an dem ein Schaft des Werkzeugs (90) im eingespannten Zustand zur Anlage kommt.

5. Bearbeitungsmaschine nach Anspruch 4, **dadurch gekennzeichnet, dass** der tiefeneinstellbare Anschlag durch einen Gewindestift (80) realisiert ist.

6. Bearbeitungsmaschine nach Anspruch 2, **dadurch gekennzeichnet, dass** der Bajonettverschluss ein erstes Bajonettverschlusselement (62) aufweist, welches an der Werkzeugaufnahme angeordnet ist und ein an dem ersten befestigbares zweites Bajonettverschlusselement (64), in welchem die Spannhülse (50) lösbar befestigbar ist.
